# EUROPEAN PATENT APPLICATION

(11) **EP 1 995 535 A2**
(43) Date of publication of application: **26.11.2008**
(21) Application number: 08380160.5
(22) Date of filing: 23.05.2008
(51) Int. Cl.: F24J 2/54, H01L 31/042

(54) **Photovoltaic solar installation**

(30) Priority: 24.05.2007 ES 200701092 U
(71) Applicant: Cano Meseguer, Teodoro Domingo, 30008 Murcia (Murcia) (ES); Moreno Lozano, Miguel, 30385 Los Belones-Cartagena (Murcia) (ES)
(72) Inventor: Cano Meseguer, Teodoro Domingo, 30008 Murcia (Murcia) (ES); Moreno Lozano, Miguel, 30385 Los Belones-Cartagena (Murcia) (ES)
(74) Representative: Gislon, Gabriele

(57) **Abstract**

Comprises a plurality of solar trackers (1), each of them with a fixed support structure (2) and a mobile frame (3) assembled on said fixed support structure (2) such that it can rotate in relation thereto in order to orient solar panels fixed to a part (3a) of said mobile frame (3) bearing said solar panels, for the purpose of following the movement of the sun throughout the day to obtain at all times an impingement of rays of sunlight on said panels.

The photovoltaic solar installation also comprises a connection element (5) mechanically attached to the mobile frames (3) of all the solar trackers of said installation and to drive means controlled by control means to move said connection element (5) in both directions for the purpose of making all the mobile frames (3) rotate simultaneously.

## Description

### Field of the Art

The present invention generally relates to a photovoltaic solar installation formed by a plurality of solar trackers able to move in relation to one or more axes, and particularly to a photovoltaic installation adapted to make respective mobile frames of all the solar trackers of the installation rotate simultaneously in relation to a vertical axis.

### Prior State of the Art

Different proposals relating to solar trackers which are also known as solar orienting devices are known which, for the purpose of achieving the maximum use of solar energy consist of control mechanisms and systems which allow orienting a series of solar panels throughout the day such that sunlight impinges on them at all times.

Some of said solar trackers, known as single-axis trackers, allow orienting the panels by means of the rotation of a mobile frame supporting such panels.

Other trackers, known as biaxial or dual-axis solar trackers, in addition to the mentioned rotation of the mobile frame, also allow varying the inclination of the solar panels for the purpose of obtaining at all times an impingement of rays of sunlight on the panels in a substantially perpendicular manner.

Utility model ES-A-1044310 relates to one of said dual-axis solar trackers, comprising a metal bar forming part of the base, in which bar a tube is introduced to which a frame bearing the solar panels is fixed. A plate making the tube (and with it the entire frame) rotate in relation to bar is also fixed to said tube. For such function, it proposes using a geared motor attached to the base of the tracker supplying movement by means of a chain attaching a pinion of the geared motor to the plate of the tube.

Utility model ES-A-1064510 in turn proposes a solar tracker formed by a plurality of solar panels or assemblies of solar panels assembled on independent and aligned supports, each of which can vary its inclination to follow the movement of the sun during the day. Said utility model proposes arranging in parallel with the alignment of supports a rail over which there runs a common runner which is connected by means of respective connecting rods with all the panels or assemblies of panels in order to cause their simultaneous rotation about their inclined axes, i.e. to cause the simultaneous inclination of all the panels when the runner moves, which runner is preferably driven by a single motor.

Proposals are not known which propose systems which enable carrying out the rotational movement in relation to a vertical axis, like that described above in relation to utility model ES-A-1044310, for a plurality of solar trackers simultaneously.

### Disclosure of the Invention

It appears necessary to offer an alternative to the state of the art which allows the simultaneous rotational movement, in relation to an axis that is substantially perpendicular to the plane of the ground in which they are installed, of a plurality of solar trackers forming a photovoltaic installation.

To that end, the present invention relates to a photovoltaic solar installation, of the type comprising a plurality of solar trackers, each of them with a fixed support structure and a mobile frame assembled on said fixed support structure such that it can rotate in relation thereto in order to orient solar panels fixed to a ramp structure of said mobile frame for the purpose of following the movement of the sun throughout the day to obtain at all times an impingement of the rays of sunlight on said panels.

Unlike conventional installations, the photovoltaic solar installation proposed by the present invention comprises a connection element mechanically attached to the mobile frames of all the solar trackers of said installation and to drive means controlled by control means to move said connection element in both directions for the purpose of making all the mobile frames rotate simultaneously.

For one embodiment said connection element is a rigid element, such as a bar which, through corresponding connecting rods, allows the mentioned movement in both directions by means of the respective traction and push of said bar.

Nevertheless, for a preferred embodiment the connection element is a flexible element operated under traction, such as a steel cable.

For one embodiment said flexible connection element defines a closed circuit and is attached at both ends to a member moved by a single motor-driven device of said drive means, the motor-driven device being adapted to rotate in both directions, pulling in each case one or the other end of the flexible connection element through said member.

For another embodiment the flexible connection element is attached at a first end to a member moved by a first motor-driven device of said drive means and at a second end to a member moved by a second motor-driven device of the drive means, each of said motor-driven devices being adapted to pull, through said parts moved by them, the end of the flexible connection element to which each of said members is attached, each of them in a respective direction.

The motor-driven device or devices (such as geared motors) can be arranged in different locations of the photovoltaic installation depending on the embodiment, although they will preferably be located in at least one of the solar trackers, for example, in a manner similar to the arrangement of the geared motor of utility model ES-A-1044310.

### Brief Description of the Drawings

The previous and other advantages and features will be more fully understood from the following detailed description of several embodiments with reference to the attached drawings, which must be considered to be illustrative and non-limiting, in which:
Figure 1 is a perspective view showing part of a solar tracker of the photovoltaic installation proposed by the invention, for one embodiment,
Figure 2 is a plan view of a section of the tracker of Figure 1 through a section plane perpendicular to the axis of rotation of the tracker and exactly above the flexible connection element,
Figure 3 is a side elevational view showing a solar tracker like that of Figure 1 but with all the elements forming part thereof, including the solar panels,
Figure 4 is a front elevational view of the solar tracker of Figure 1 through a plane parallel to the axis of rotation of the tracker, and
Figure 5 is a schematic plan view of the photovoltaic installation proposed by the present invention for one embodiment.

### Detailed Description of Embodiments

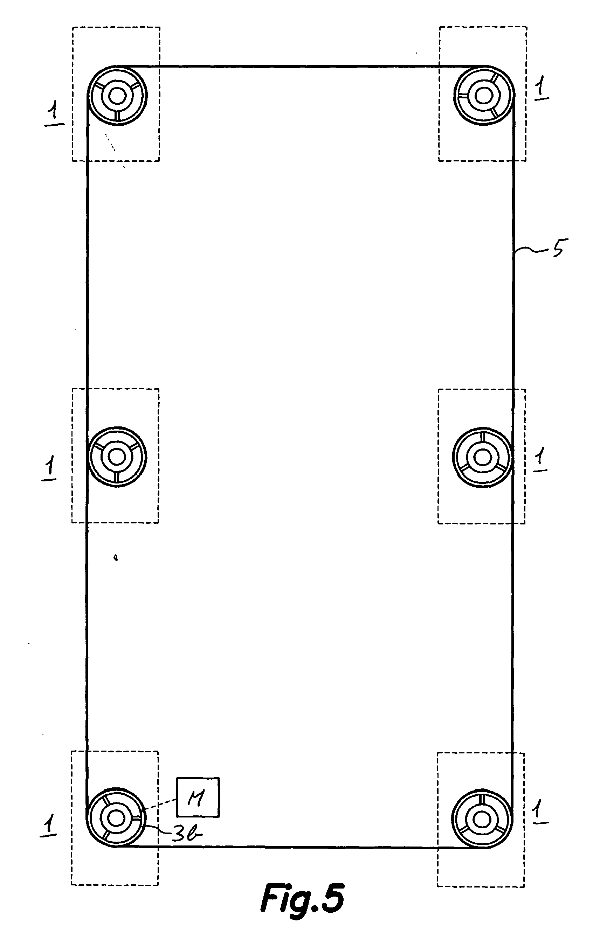

The present invention relates to a photovoltaic solar installation such as that shown in Figure 5, for a preferred embodiment, where part of the solar trackers 1 shown therein have been depicted with a dotted line for the sake of greater clarity.

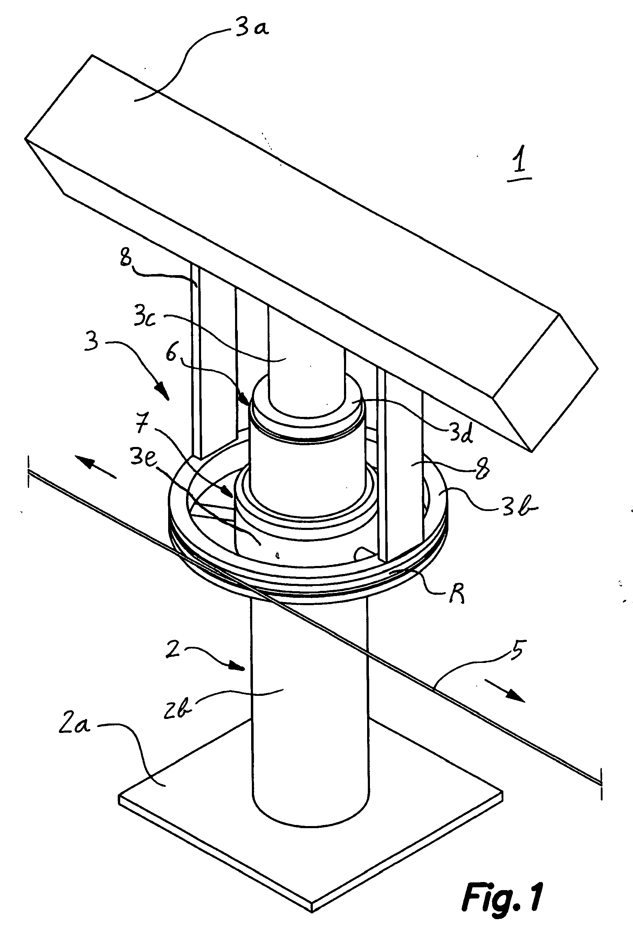

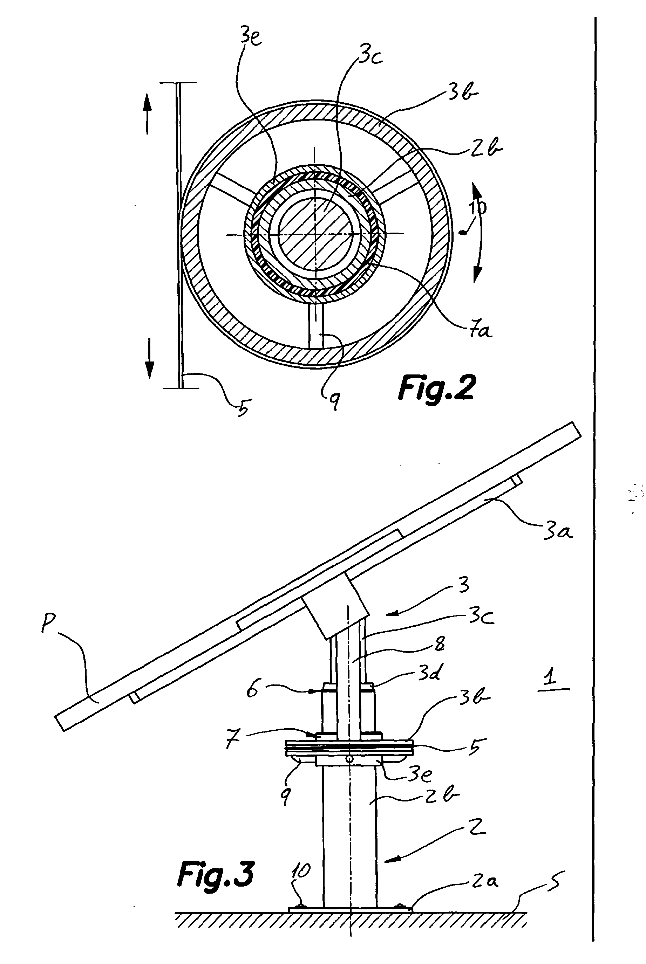

Said installation comprises a plurality of solar trackers 1, one of which is completely or partially shown in Figures 1 to 4 and which as can be seen, especially in Figure 3, comprises a fixed support structure 2 and a mobile frame 3 assembled on said fixed support structure 2 such that it can rotate in relation thereto in order to orient solar panels P fixed to a part 3a of said mobile frame 3 bearing said solar panels P, for the purpose of following the movement of the sun throughout the day to obtain at all times an impingement of the rays of sunlight on said panels P.

Said Figure 3 shows how a base 2a of the fixed support structure 2 is fixed to a floor S through fixing devices 10. Although in said Figure 3 the floor S has been shown as a horizontal floor, for other embodiments that are not shown said floor can be inclined.

For the purpose of making all the mobile frames 3 rotate simultaneously, the photovoltaic solar installation proposed by the present invention comprises a connection element 5 mechanically attached to the mobile frames 3 of all the solar trackers of said installation (as can be seen in Figure 5) and to drive means controlled by control means (not shown) to move said connection element 5 in both directions.

Although the invention is not limited to it, said connection element 5 is generally a flexible element operated under traction, as is the case of the preferred embodiment shown in the attached figures, such as a steel cable for example.

For a preferred embodiment, shown in Figure 5, said flexible connection element 5 defines a closed circuit which is attached at both ends to a member moved by a single motor-driven device M of said drive means, said motor-driven device M being adapted to rotate in both directions, pulling in each case one or the other end of the flexible connection element 5 through said at least one member.

Figure 5 depicts a single motor-driven device M with a connection (indicated by a dotted line) to a circular structure 3b of one of the solar trackers 1, said circular structure 3b (which will be described below) being in this case the mentioned member moved by said single motor-driven device M.

For other embodiments that are not shown, the motor-driven device or devices M (such as geared motors) can be arranged in different locations of the photovoltaic installation.

For another embodiment that is not shown, for which the flexible connection element 5 does not define a closed circuit (as would be the case that the solar trackers 1 were grouped forming a single row), such element is attached at a first end to a member moved by a first motor-driven device M of said drive means and at a second end to a member moved by a second motor-driven device M of the drive means, each of said motor-driven devices being adapted to pull, through said members moved by them, the end of the flexible connection element 5 to which each of said members is attached, each of them in a respective direction.

As can be seen in Figures 1, 2, 3 and 4 each of said mobile frames 3 comprises a circular structure 3b concentric to the axis of rotation of the mobile frame 3 providing a support track for the flexible connection element 5, the flexible connection element 5 running over at least part of the perimetric contours of the circular structures 3b of all the mobile frames 3 and being fixed at a point of the perimetric contour of each circular structure 3b.

As can be seen in Figures 1, 3 and 4 said first ring-shaped structure 3e is fixed to said part 3a bearing said solar panels P through respective attachment columns 8.

Figure 2 shows, indicated with reference number 10, the attachment of the flexible connection element 5 with a circular structure 3b at the mentioned point of its perimetric contour, which can be carried out, for example, by means of an attachment clamp 10.

In the embodiment clearly shown in Figures 1 and 2, the flexible connection element 5 makes a complete turn over the entire perimetric contour of the circular structure 3b, although depending on the embodiment and on the location of the solar tracker 1 in the photovoltaic installation, the flexible connection element 5 can make less or more than one turn around the circular structure 3b.

For one embodiment, not shown, for which the photovoltaic installation comprises for example two groups of solar trackers 1 like those shown in Figure 5, i.e. two groups of six solar trackers 1, an intermediate solar tracker 1 of a line of three solar trackers 1 of one of the groups would be connected to another respective intermediate solar tracker 1 of a line of three solar trackers 1 of the other group by means of an intermediate section of the flexible connection element 5, which in this case would make a one and three quarter turn around each intermediate tracker 1 so that both can rotate 360°. The closed circuit would be closed by interconnecting the four solar trackers 1 (two of each group) which would form a lower line of the photovoltaic installation by means of another section of the connection element 5.

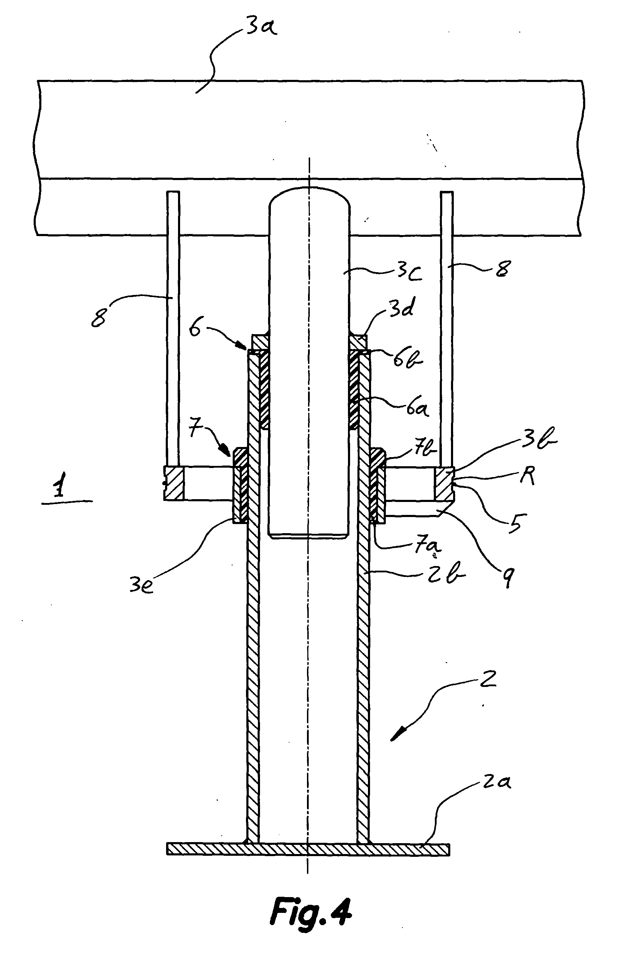

For the embodiment shown, as can be especially seen in Figures 1 and 4, said circular structure 3b defines a perimetric groove R along its entire outer perimetric contour for the support and passage of the flexible connection element 5.

As can be seen in the embodiment shown by Figures 1 to 4, the fixed support structure 2 comprises a base 2a fixed to the floor S (through fixing devices 10 as can be seen in Figure 3) and a hollow cylindrical body 2b extending perpendicularly from said base 2a as a pillar and which is open at the upper part, and the mobile frame 3 comprises a cylindrical member 3c introduced in said hollow cylindrical body 2b and coupled thereto through a first anti-friction bearing 6 with a sleeve 6a for radial forces and a flange 6b seated on the opening of the hollow cylindrical body 2b for axial forces.

For the embodiment clearly shown in Figure 4 said sleeve 6a and said flange 6b are integrated in a single part 6, although for another embodiment that is not shown they could be independent parts.

Figures 1, 3 and 4 show how the mobile frame 3 comprises a ring-shaped part 3d surrounding and fixed to said cylindrical member 3c to act as a stop against an upper face of said flange 6b.

In Figures 1 to 4 it can be seen that the circular structure 3b is a first ring-shaped structure 3b, and that the mobile frame 3 comprises a second ring-shaped structure 3e with a smaller diameter than the first ring-shaped structure 3b, which is concentric and attached to the first ring-shaped structure 3b by means of radial crosspieces 9.

Said second ring-shaped structure 3e is coupled to the outer contour of the hollow cylindrical body 2b through a second anti-friction bearing 7 with a sleeve 7a for radial forces and a flange 7b seated on the upper edge of the second ring-shaped structure 3e, as can be seen in Figure 4 where said sleeve 7a and said flange 7b are integrated in a single part 7, although for other embodiments they could be independent parts.

For a preferred embodiment, both bearings 6, 7 are manufactured from a material with a low friction coefficient, such as an acetal resin polymer or another material considered to be suitable by a person skilled in the art.

The present invention is applicable to both installations formed by single-axis solar trackers and installations formed by dual-axis solar trackers.

A person skilled in the art could introduce changes and modifications in the described embodiments without departing from the scope of the invention as it is defined in the attached claims.

## Claims

1. A photovoltaic solar installation of the type comprising a plurality of solar trackers (1), each of them with a fixed support structure (2) and a mobile frame (3) assembled on said fixed support structure (2) such that it can rotate in relation thereto in order to orient solar panels (P) fixed to a part (3a) of said mobile frame (3) bearing said solar panels (P), for the purpose of following the movement of the sun throughout the day to obtain at all times an impingement of rays of sunlight on said panels (P), **characterized in that** it comprises a connection element (5) mechanically attached to the mobile frames (3) of all the solar trackers of said installation and to drive means controlled by control means to move said connection element (5) in both directions for the purpose of making all the mobile frames (3) rotate simultaneously.

2. An installation according to claim 1, **characterized in that** said connection element (5) is a flexible element operated under traction.

3. An installation according to claim 2, **characterized in that** said flexible connection element (5) defines a closed circuit and is attached at both ends to at least one member moved by a single motor-driven device (M) of said drive means, said motor-driven device (M) being adapted to rotate in both directions, pulling in each case one or the other end of the flexible connection element (5) through said at least one member.

4. An installation according to claim 2, **characterized in that** said flexible connection element (5) is attached at a first end to a member moved by a first motor-driven device (M) of said drive means and at a second end to a member moved by a second motor-driven device (M) of the drive means, each of said motor-driven devices being adapted to pull, through said members moved by them, the end of the flexible connection element (5) to which each of said members is attached, each of them in a respective direction.

5. An installation according to any of claims 2 to 4, **characterized in that** each of said mobile frames (3) comprises a circular structure (3b) concentric to the axis of rotation of the mobile frame (3) providing a support track for the flexible connection element (5), the flexible connection element (5) running over at least part of the perimetric contours of the circular structures (3b) of all the mobile frames (3) and being fixed at a point of the perimetric contour of each circular structure (3b).

6. An installation according to claim 5, **characterized in that** said circular structure (3b) defines a perimetric groove (R) along its entire outer perimetric contour for the support and passage of the flexible connection element (5).

7. An installation according to any of claims 1 to 6, **characterized in that** said fixed support structure (2) comprises a base (2a) fixed to the floor and a hollow cylindrical body (2b) extending perpendicularly from said base (2a) as a pillar and which is open at the upper part, and **in that** said mobile frame (3) comprises a cylindrical member (3c) introduced in said hollow cylindrical body (2b) and coupled thereto through a first anti-friction bearing (6) with a sleeve (6a) for radial forces and a flange (6b) seated on the opening of the hollow cylindrical body (2b) for axial forces.

8. An installation according to claim 7, **characterized in that** each mobile frame (3) comprises a part (3d) at least partly surrounding and fixed to said cylindrical member (3c) to act as a stop against an upper face of said flange (6b).

9. An installation according to claim 7 or 8, **characterized in that** said circular structure (3b) is a first ring-shaped structure (3b), and **in that** each of said mobile frames (3) comprises a second ring-shaped structure (3e) with a smaller diameter than said first ring-shaped structure (3b), which is concentric and attached to the first ring-shaped structure (3b) by means of radial crosspieces (9).

10. An installation according to claim 9, **characterized in that** said second ring-shaped structure (3e) is coupled to the outer contour of said hollow cylindrical body (2b) through a second anti-friction bearing (7) with a sleeve (7a) for radial forces and a flange (7b) seated on the upper edge of the second ring-shaped structure (3e).

11. An installation according to claim 9 or 10, **characterized in that** said first ring-shaped structure (3e) is fixed to said part (3a) bearing said solar panels (P) through respective attachment columns (8).

12. An installation according to claim 2, 3 or 4, **characterized in that** said flexible connection element (5) is a steel cable.
